# EUROPEAN PATENT APPLICATION

(11) **EP 4 074 660 A1**
(43) Date of publication of application: **19.10.2022**
(21) Application number: 21168417.0
(22) Date of filing: 14.04.2021
(51) Int. Cl.: C01G 53/04, H01M 4/00

(54) **PROCESS FOR MAKING AN ELECTRODE ACTIVE MATERIAL, AND ELECTRODE ACTIVE MATERIAL**

(71) Applicant: BASF SE, 67056 Ludwigshafen am Rhein (DE)
(72) Inventor: TER MAAT, Johan, 68163 Mannheim (DE); KURZHALS, Philipp, 67056 Ludwigshafen (DE); RIEWALD, Felix Florian, 72072 Tuebingen (DE); SOMMER, Heino, 72072 Tuebingen (DE)
(74) Representative: BASF IP Association

(57) **Abstract**

Process for making an electrode active material wherein said process comprises the following steps:
(a) Providing an (oxy)hydroxide of TM wherein TM is one or more metals wherein at least 90 mol% is Ni, referring to TM,
(b) Contacting said (oxy)hydroxide of TM with an aqueous slurry or colloidal solution of an oxyhydroxide of Zr or Ti, followed by removal of water,
(c) heating said treated (oxy)hydroxide of TM from step (b) at a temperature in the range of from 700 to 1000°C, thereby obtaining a Zr or Ti containing oxide TMO or an oxyhydroxide of TM with a residual moisture content of at most 100 ppm,
(d) mixing said oxide or oxyhydroxide from step (c) with a source of lithium and with at least one compound of Mg or Al and with at least one compound of Nb, Ta, W, or with either a compound of Ti or Zr,
(e) treating the mixture obtained from step (d) thermally at a temperature in the range of from 550 to 850°C.

## Description

The present invention is directed towards a process for making an electrode active material wherein said process comprises the following steps:
(a) Providing an (oxy)hydroxide of TM wherein TM is one or more metals wherein at least 90 mol% is Ni, referring to TM,
(b) Contacting said (oxy)hydroxide of TM with an aqueous slurry or a colloidal solution of an oxyhydroxide of Zr or Ti, followed by removal of water,
(c) heating said treated (oxy)hydroxide of TM from step (b) at a temperature in the range of from 700 to 1000°C, thereby obtaining a Zr or Ti containing oxide TMO or an oxyhydroxide of TM with a residual moisture content of at most 100 ppm,
(d) mixing said oxide or oxyhydroxide from step (c) with a source of lithium and with at least one compound of Mg or Al and with at least one compound of Nb, Ta, W, or with either a compound of Ti or Zr,
(e) treating the mixture obtained from step (d) thermally at a temperature in the range of from 550 to 850°C.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as hydroxides that may or may not be basic. The precursor is then mixed with a lithium salt such as, but not limited to LiOH, Li₂O or - especially - Li₂CO₃ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1000°C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln.

One problem of lithium ion batteries - especially of Ni-rich electrode active materials - is attributed to undesired reactions on the surface of the electrode active materials. Such reactions may be a decomposition of the electrolyte or the solvent or both. It has thus been tried to protect the surface without hindering the lithium exchange during charging and discharging. Examples are attempts to coat the electrode active materials with, e.g., aluminium oxide or calcium oxide, see, e.g., US 8,993,051. Other theories assign undesired reactions to free LiOH or Li₂CO₃ on the surface. Attempts have been made to remove such free LiOH or Li₂CO₃ by washing the electrode active material with water, see, e.g., JP 4,789,066 B, JP 5,139,024 B, and US2015/0372300. However, in some instances it was observed that the properties of the resultant electrode active materials did not improve.

It was an objective of the present invention to provide a process for making Ni-rich electrode active materials with excellent electrochemical properties. It was also an objective to provide Ni-rich electrode active materials with excellent electrochemical properties.

Accordingly, the process defined at the outset has been found, hereinafter also referred to as "inventive process". The inventive process comprises the following steps:
(a) Providing an (oxy)hydroxide of TM wherein TM is one or more metals wherein at least 90 mol% is Ni, referring to TM,
(b) Contacting said (oxy)hydroxide of TM with an aqueous slurry or a colloidal solution of an oxyhydroxide of Zr or Ti, followed by removal of water,
(c) heating said treated (oxy)hydroxide of TM from step (b) at a temperature in the range of from 700 to 1000°C, thereby obtaining a Zr or Ti containing oxide TMO or an oxyhydroxide of TM with a residual moisture content of at most 100 ppm,
(d) mixing said oxide or oxyhydroxide from step (c) with a source of lithium and with at least one compound of Mg or Al and with at least one compound of Nb, Ta, W, or with either a compound of Ti or Zr,
(e) treating the mixture obtained from step (d) thermally at a temperature in the range of from 550 to 850°C.

The inventive process comprises five steps, (a), (b), (c), (d) and (e), in the context of the present invention also referred to as step (a) and step (b) and step (c) and step (d) and step (e), respectively.

In step (a), a particulate (oxy)hydroxide of TM wherein TM is one or more metals wherein at least 90 mol% is Ni, referring to TM, said particulate (oxy)hydroxide also being referred to as precursor.

In one embodiment of the invention, in step (a) a nickel hydroxide or nickel (oxy)hydroxide is provided, hereinafter altogether also referred to as nickel (oxy)hydroxide.

In one embodiment of the present invention, TM is nickel. In another embodiment of the present invention, TM is a combination of at least 90 mol-% nickel, referring to TM, with at least one of cobalt and manganese.

In one embodiment of the present invention, TM corresponds to general formula (I)

(NiₐCo_{b}Mn_{c})_{1-d}M¹_{d} (I)

wherein a + b + c + d = 1 and b +c ≥ zero and a · (1-d) ≥ 0.9, and
a is in the range of from 0.90 to 0.99, preferably from 0.95 to 0.98,
b is in the range of from zero to 0.1, preferably from 0.01 to 0.04,
c is in the range of from zero to 0.1, preferably 0.01 to 0.04,
d is in the range of from zero to 0.05, preferably from zero to 0.01,
M¹ is at least one of Al, Mg, W, Mo, Ti or Zr, preferably at least one of Mg, Al, Ti and W.

In the context of the present invention, the term (oxy)hydroxide of TM is not limited to stoichiometric TMO(OH) but to any compound of TM that bears only hydroxide and - optionally - oxide counterions and a maximum individual content of anionic impurities of 2% by weight of said precursor, such as carbonate and/or sulfate.

Some elements are ubiquitous. In the context of the present invention, traces of ubiquitous metals such as sodium, calcium, iron or zinc, as impurities will not be taken into account in the description of the present invention. Traces in this context will mean amounts of 0.005 mol-% or less, referring to the total metal content of TM.

The precursor provided in step (a) has an average particle diameter (D50) in the range of from 2 to 20 µm, preferably from 4 to 16 µm. The average particle diameter can be determined, e. g., by light scattering or LASER diffraction or electroacoustic spectroscopy. The particles may be composed of agglomerates from primary particles, and the above particle diameter refers to the secondary particle diameter.

A preferred nickel (oxy)hydroxide is nickel hydroxide, especially freshly precipitated.

In one embodiment of the present invention, precursors provided in step (a) have a residual moisture content in the range of from 100 to 1,000 ppm, preferably from 100 to 400 ppm. The residual moisture content may be determined by Karl-Fischer titration.

In one embodiment of the present invention, precursors provided in step (a) have a specific surface (BET), hereinafter also referred to as "BET surface", in the range of from 1.0 to 70 m²/g. The BET surface may be determined by nitrogen adsorption after outgassing of the sample at 200°C for 30 minutes or more and beyond this accordance with DIN ISO 9277:2010.

In one embodiment of the present invention, precursors provided in step (a) have a narrow particle diameter distribution, measured as their span. The span may be defined as ((D90) - D(10))/D(50), and the span being in the range of from 0.30 to 0.60, preferably of from 0.3 to 0.5.

In another embodiment of the present invention, precursors provided in step (a) have a broad particle diameter distribution, measured as their span. The span may be defined as ((D90) - D(10))/D(50), and the span being in the range of from 0.65 to 5.0, preferably of from 0.9 to 1.5.

Step (b) includes contacting said (oxy)hydroxide of TM with an aqueous slurry or a colloidal solution of an oxyhydroxide of Zr or Ti, followed by removal of water. Zr is preferred. In said oxyhydroxide, Ti and especially Zr are preferably in the oxidation state of +IV.

Examples of oxyhydroxides of Ti and of Zr are TiO(OH)₂, TiO₂·aq, Zr(OH)₄, ZrO(OH)₂, ZrO₂·aq, of which ZrO(OH)₂, and ZrO₂·aq are preferred, more preferred is ZrO₂·aq.

In one embodiment of the present invention, said oxyhydroxides of Ti and preferably of Zr are provided as colloidal formulation ("colloidal solution"). It is preferred that oxyhydroxides of

Ti and preferably of Zr are used in step (b) as colloidal solution, the average particle diameter being in the range of from 5 to 10 nm, determined from the full width at half maximum ("FWMH") of reflections detected in X-ray diffraction diagrams. Such particles in colloidal solutions may form agglomerates with an average particle diameter in the range of from 20 to 200 nm, preferably 20 to 50 nm. Such colloidal solutions preferably have a pH value in the range of from 7 to 10. As dry powders, agglomerates may be formed with an average particle diameter of up to 15 µm. Colloidal solutions may contain a stabilizer, for example ammonia.

In one embodiment of the present invention, the molar ratio of Ti or preferably Zr with respect to TM is in the range of from 0.0025 to 0.01.

In embodiments where a slurry is employed, the average particle diameter of oxyhydroxide of Ti or Zr is bigger, for example in the range of from 0.1 to 10 µm, preferably 250 nm to 1 µm.

In one embodiment of the present invention, the solids content of the slurry or preferably colloidal solution used in step (b) is in the range of from 0.1 to 10%, preferably 0.2 to 1%.

In one embodiment of the present invention, the pH value of the slurry or preferably colloidal solution used in step (b) is in the range of from 7 to 10, preferably 7 to 8.

In one embodiment of the present invention, in step (b) the weight ratio of (oxy)hydroxide of TM and aqueous slurry or colloidal solution of oxyhydroxide of Zr or Ti is in the range of from 10:1 to 1:10, preferably 3:1 to 1:1.

In one embodiment of the present invention, the contacting according to step (b) has a duration in the range of from 15 seconds to 5 hours, preferably 30 seconds to 10 minutes. This duration does not take the time for removal of water into account.

In one embodiment of the present invention, the contacting according to step (b) is performed at a temperature in the range of from 10 to 50°C, preferably 15 to 30°C.

In one embodiment of the present invention, the contacting according to step (b) is performed in plough share mixers with heating elements, for example with heating jackets. Step (b) is preferably supported by mixing operations. On laboratory scale, petri dishes are suitable as well.

At the end of step (b), water is removed in whole or in part, for example by filtration or by evaporation, for example at a temperature in the range of from 105 to 150°C and under normal pressure, preferably under reduced pressure.

A Zr or Ti containing (oxy)hydroxide of TM is obtained from step (b).

In step (c), Zr or Ti containing (oxy)hydroxide of TM as obtained from step (b) is dried at a temperature in the range of from 700 to 1000°C, thereby obtaining a Ti- or preferably a Zr-containing oxide TMO or an oxyhydroxide of TM with a residual moisture content of at most 100 ppm. Especially when TM contains significant amounts of manganese, a partial oxidation of TM and specifically of the manganese takes place, and the oxide is not strictly stoichiometric TMO.

The residual moisture content may be determined, e.g., by Karl-Fischer Titration.

Step (c) may have a duration in the range of from 30 minutes to 7 hours, preferably 1 to 2 hours.

In one embodiment of the present invention, step (c) is carried out in a roller hearth kiln, a pusher kiln or preferably in a plough-share mixer with heating system, and even more preferred in a rotary kiln, for example in a rotary kiln with inclination angle of from 0.5 to 3°. In rotary kilns, 0.5 to 2 revolutions per minute are preferred. On lab scale, step (c) may be carried out in a muffle oven as well.

In one embodiment of the present invention, step (c) is carried out under an atmosphere of air, synthetic air or nitrogen.

In one embodiment of the present invention, the Ti- or preferably Zr-containing oxide TMO or oxyhydroxide of TM from step (c) has a specific surface (BET) in the range of from 50 to 120 m²/g, determined by nitrogen adsorption after drying at 120°C for 60 minutes, for example in accordance with to DIN-ISO 9277:2003-05.

Step (d) includes mixing said Ti- or preferably said Zr-containing oxide TMO or oxyhydroxide of TM from step (c) with a source of lithium and with at least one compound of Mg or Al and with at least one compound of Nb, Ta, W, or with either a compound of Ti or Zr.

Examples of sources of lithium are inorganic compounds of lithium, for example LiNO₃, Li₂O, LiOH, Li₂O₂, Li₂CO₃, and combinations of at least two of the foregoing, preference being given to Li₂O, LiOH and Li₂CO₃, water of crystallization being neglected in the context of the source of lithium, and even more preference being given to LiOH.

In one embodiment of the present invention, said source of lithium has an average particle diameter (D50) in the range of from 1 to 50 µm, preferably 20 to 30 µm.

Examples of compounds of Mg are magnesium nitrate, MgO, MgCO₃, Mg(HCOa)₂ and Mg(OH)₂, preference being given to MgO and Mg(OH)₂, water of crystallization being neglected in the context of the source of magnesium. Even more preferred is Mg(OH)₂.

In one embodiment of the present invention, said compound of magnesium is particulate and has an average particle diameter (D50) in the range of from 50 nm to 1 µm, determined by dynamic light scattering.

Suitable compounds of aluminum are, e.g., Al(NO₃)₃, Al₂O₃, Al(OH)₃, AIOOH, Al₂O₃·aq, preference being given to AIOOH and Al₂O₃, especially γ-Al₂O₃. Said source of aluminum may be added as aqueous solution, aqueous slurry or in particulate form, particulate form being preferred.

In one embodiment of the present invention, said compound of Al is particulate and has an average particle diameter (D50) in the range of from 0.5 nm to 10 µm, determined by dynamic light scattering.

Suitable compounds of Ti are TiO(OH)₂, Ti(OH)₄, TiO₂, TiO₂·aq, preferred is TiO₂.

In one embodiment of the present invention, said compound of Ti is particulate and has an average particle diameter (D50) in the range of from 1 µm to 10 µm measured by laser diffraction.

Suitable compounds of Zr are Li₂ZrO₃, ZrO(OH)₂, Zr(OH)₄, ZrO₂, ZrO₂·aq, preferred are Zr(OH)₄, ZrO₂, and ZrO₂·aq, even more preferred is Zr(OH)₄.

Examples of compounds of tungsten are WO₃, (NH₄)₂WO₄, Li₂WO₄, and Li₄WO₅.

Examples of compounds of Nb are Nb₂O₅, niobic acid, and ammonium niobate.

An example of compounds of tantalum is Ta₂O₅.

Examples of compounds of molybdenum are MoO₃, (NH₄)₂MoO₄, Li₂MoO₄, and Li₄MoO₅.

In one embodiment of the present invention, said compound of Zr is particulate and has an average particle diameter (D50) in the range of 1 µm to 10 µm measured by laser diffraction.

In one embodiment of the present invention, the molar ratio of source of lithium to (TM + M¹) added in step (d) is in the range of from 1.05 : 1 to 1.0 : 1.

It is preferred that in steps (b) and (d), the same transition metal is not added twice. That means that in embodiments wherein in step (b) an oxyhydroxide of Ti is used no compound of Ti is added in step (d), and that in embodiments wherein in step (b) an oxyhydroxide of Zr is used no compound of Zr is added in step (d).

Step (d) may comprise the sub-steps of mixing oxide or oxyhydroxide of TM with said source of lithium followed by a sub-step of addition of a compound of. Said sub-steps shall be described in more detail below. It is preferred, though, to perform step (d) in one step or to first mix source of lithium with compound of magnesium or aluminum and with compound of Ti or Zr, sub-step (d1), followed by combination of the resultant mixture with oxide or oxyhydroxide of TM, sub-step (d2). In other embodiments, oxide or oxyhydroxide of TM are mixed with source of lithium and with compound of magnesium or aluminum and with compound of Ti or Zr in a single step.

Examples of suitable apparatuses for performing step (d) are high-shear mixers, tumbler mixers, plough-share mixers, grinding mills and free fall mixers.

Step (d) may be performed at any temperature in the range of from zero to 100°C, ambient temperature being preferred.

In one embodiment of the present invention, step (d) has a duration of 10 minutes to 2 hours. Depending on whether additional mixing is performed in step (e) or not, thorough mixing has to be accomplished in step (d).

Although it is possible to add an organic solvent, for example glycerol or glycol, or water in step (d) it is preferred to perform step (d) in the dry state, that is without addition of water or of an organic solvent.

A mixture is obtained from step (d).

Step (e) includes subjecting said mixture to heat treatment, for example at a temperature in the range of from 550 to 875°C, preferably 650 to 850°C.

In one embodiment of the present invention, the mixture from step (e) is heated with a heating rate of 0.1 to 10°C/min.

In one embodiment of the present invention, the temperature is ramped up before reaching the desired temperature of from 550 to 875°C, preferably 650 to 850°C. For example, first the mixture from step (d) is heated to a temperature to 350 to 550°C and then held constant for a time of 10 min to 4 hours, and then it is raised to 550°C up to 875°C.

In embodiments wherein in step (d) at least one solvent has been used, as part of step (e), or separately and before commencing step (e), such solvent(s) are removed, for example by filtration, evaporation or distilling of such solvent(s). Preferred are evaporation and distillation.

In one embodiment of the present invention, step (e) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (e) is performed in an oxygen-containing atmosphere, for example in pure oxygen or in oxygen-enriched air, for example in a 1:3 to 1:10 by volume mixture of air and oxygen, preference being given to pure oxygen.

In one embodiment of the present invention, the thermal treatment in step (e) is at a lower temperature than in step (c), for example by 100 to 700°C.

Cathode active materials are obtained from step (e) or, if applicable, from below step (f) that meet the objective discussed in the beginning.

In one embodiment of the present invention, the inventive process comprises a step (f) of adding a compound of B (boron) or tungsten to the material obtained from step (e) and a subsequent thermal treatment.

In said optional step (f), a compound of boron is added to the material obtained from step (e), and subsequently a thermal treatment is performed.

Examples of compounds of boron are B₂O₃, boric acid (B(OH)₃) and lithium borates, for example LiBO₂. Boric acid is preferred. Said compound of boron may be added in bulk or in solution, for example as aqueous solution.

Combinations of compounds of tungsten and of boron are possible as well.

Examples of compounds of tungsten are WO₃, (NH₄)₂WO₄, Li₂WO₄, and Li₄WO₅.

In one embodiment of the present invention, the material obtained from step (e) are allowed to interact, for example in the range of from 10 minutes to 5 hours and at a temperature of from 5 to 85°C.

In one embodiment of the present invention, the amount of compound of boron added in step (f) is in the range of from 0.05 to 1.5 mol-%, preferably 0.15 to 0.9 mol-%, referring to TM.

Subsequently to the addition of compound of boron a thermal treatment is performed. Said thermal treatment may be carried out in any type of oven, for example a roller hearth kiln, a pusher kiln, a rotary kiln, a pendulum kiln, or - for lab scale trials - in a muffle oven.

The temperature of said thermal treatment in step (f) may be in the range of from 150 to 600°C, preferably 250 to 500°C and even more preferably from 250 to 400°C. Said temperature refers to the maximum temperature of step (f).

In one embodiment of the present invention, the temperature is ramped up before reaching the desired temperature of from 150 to 600°C. For example, first the mixture of step (f) is heated to a temperature to 350 to 550°C and then held constant for a time of 10 min to 4 hours, and then it is raised to 500 to 600°C.

In one embodiment of the present invention, the heating rate in step (f) is in the range of from 0.1 to 10 °C/min.

In one embodiment of the present invention, the heat treatment step (f) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, the heat treatment in step (f) is performed in an oxygen-containing atmosphere, for example in a nitrogen-air mixture, in a rare gas-oxygen mixture, in air, in oxygen or in oxygen-enriched air or in pure oxygen. In a preferred embodiment, the atmosphere in step (f) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen. Pure oxygen is even more preferred.

In one embodiment of the present invention, the heat treatment in step (f) has a duration in the range of from 30 minutes to 5 hours. Preferred are 60 minutes to 4 hours. The cooling time is neglected in this context.

A further aspect of the present invention relates to precursors, hereinafter also referred to as inventive precursors. Inventive precursors may be obtained by preforming the steps (a) to (c) of the inventive process.

Specifically, inventive precursors are particulate oxides according to general formula TMO_{1+y}, wherein y is in the range of from zero to 0.1, TM is nickel or corresponds to general formula (II),

(NiₐCO_{b}Mn_{c})₁₋ₑM²ₑ (I)

with a + b + c = 1 and b +c ≥ zero and a ·(1-e) ≥ 0.9 and wherein
a is in the range of from 0.90 to 0.99, preferably from 0.95 to 0.98,
b is in the range of from zero to 0.1, preferably from 0.01 to 0.04,
c is in the range of from zero to 0.1, preferably 0.01 to 0.04,
e is in the range of from 0.0025 to 0.01,
M² is at least one of Ti and Zr, preferably M² is Zr.

In one embodiment of the present invention, inventive precursors have an average primary particle diameter (D50) in the range of from 200 to 1,000 nm.

In one embodiment of the present invention, TM is nickel. In another embodiment of the present invention, TM is a combination of metals with at least 90 mol-% nickel, referring to TM, with at least one of cobalt and manganese, preferably both Mn and Co.

In inventive precursor, Ti or especially Zr is forming a homogeneous layer on the (oxy)hydroxide of TM or the oxide of TM, respectively, as determine by TEM-EDX.

Inventive precursors preferably have an average particle diameter (D50) in the range of from 2 to 20 µm, preferably from 4 to 16 µm. The average particle diameter can be determined, e. g., by light scattering or LASER diffraction or electroacoustic spectroscopy. The particles may be composed of agglomerates from primary particles, and the above particle diameter refers to the secondary particle diameter.

In one embodiment of the present invention, inventive precursors have a residual moisture content of less than 100 ppm, preferably from 50 to 80 ppm. The residual moisture content may be determined by Karl-Fischer titration.

In one embodiment of the present invention, inventive precursors have a specific surface (BET), hereinafter also referred to as "BET surface", in the range of from 20 to 120 m²/g, preferably 20 to 40 m²/g, determined by nitrogen adsorption after drying at 120°C for 60 minutes, for example in accordance with to DIN-ISO 9277:2003-05.

In one embodiment of the present invention, inventive precursors have a narrow particle diameter distribution, measured as their span. The span may be defined as ((D90) - D(10))/D(50), and the span being in the range of from 0.30 to 0.60, preferably of from 0.3 to 0.5.

In another embodiment of the present invention, inventive precursors have a broad particle diameter distribution, measured as their span. The span may be defined as ((D90) - D(10))/D(50), and the span being in the range of from 0.65 to 5.0, preferably of from 0.9 to 1.5.

A further aspect of the present invention relates to electrode active materials, hereinafter also referred to as inventive cathode active materials. Inventive cathode active materials comprise a composite lithium metal oxide according to the formula Li₁₊ₓTM'₁₋ₓO₂ and, optionally, a coating comprising at least one compound of boron or W, and wherein x is in the range of from - 0.02 to +0.02, and wherein TM' corresponds to general formula (III)

{(NiₐCo_{b}Mn_{c})_{1-d}M¹_{d}}₁₋ₑM²ₑ (III)

wherein
b +c ≥ zero and a ·(1-e) ≥ 0.9,
a is in the range of from 0.90 to 0.99, preferably from 0.95 to 0.98,
b is in the range of from zero to 0.1, preferably from 0.01 to 0.04,
c is in the range of from zero to 0.1, preferably 0.01 to 0.04,
e is in the range of from 0.0025 to 0.01,
M² is at least one of Ti and Zr, preferably M² is Zr.

M¹ is selected from Al, Mg, Nb, Ta, Ti, and Zr,
M² is at least one of Ti and Zr, and
a + b + c = 1.

Some elements are ubiquitous. In the context of the present invention, traces of ubiquitous metals such as sodium, calcium, iron or zinc, as impurities will not be taken into account in the description of the present invention. Traces in this context will mean amounts of 0.005 mol-% or less, referring to the total metal content of TM'.

In one embodiment of the present invention, in inventive cathode active materials
either M² is Zr and M¹ is selected from at least one of Al, Mg, Nb, Ta, and Ti, preferably Al and Mg,
or M² is Ti and M² is selected from at least one of Al, Mg, Nb, Ta, and Zr, preferably Al and Mg.

In one embodiment of the present invention, inventive cathode active materials have a BET surface in the range of from 0.1 to 1.0 m²/g. The BET surface may be determined by nitrogen adsorption after outgassing of the sample at 200°C for 30 minutes or more and beyond this accordance with DIN ISO 9277:2010.

In one embodiment of the present invention, inventive cathode active materials have a narrow particle diameter distribution, measured as their span. The span may be defined as ((D90) - D(10))/D(50), and the span being in the range of from 0.30 to 0.60, preferably of from 0.3 to 0.5.

In another embodiment of the present invention, inventive cathode active materials have a broad particle diameter distribution, measured as their span. The span may be defined as ((D90) - D(10))/D(50), and the span being in the range of from 0.65 to 5.0, preferably of from 0.9 to 1.5.

Inventive cathode active materials may have a monomodal or bimodal particle diameter distribution.

Inventive cathode active materials preferably have an average particle diameter (D50) in the range of from 2 to 20 µm, preferably from 4 to 16 µm. The average particle diameter can be determined, e. g., by light scattering or LASER diffraction or electroacoustic spectroscopy. The particles may be composed of agglomerates from primary particles, and the above particle diameter refers to the secondary particle diameter.

Inventive cathode active materials display excellent electrochemical performance, for example with regard to specific discharge capacity.

A further aspect of the present invention refers to electrodes comprising at least one electrode active material according to the present invention. They are particularly useful for lithium ion batteries. Lithium ion batteries comprising at least one electrode according to the present invention exhibit a good discharge behavior. Electrodes comprising at least one electrode active material according to the present invention are hereinafter also referred to as inventive cathodes or cathodes according to the present invention.

Inventive cathodes contain at least one inventive electrode active material.

Specifically, inventive cathodes contain
(A) at least one inventive electrode active material,
(B) carbon in electrically conductive form,
(C) a binder material, also referred to as binders or binders (C), and, preferably,
(D) a current collector.

In a preferred embodiment, inventive cathodes contain
(A) 80 to 98 % by weight inventive electrode active material,
(B) 1 to 17 % by weight of carbon,
(C) 1 to 15 % by weight of binder material,
percentages referring to the sum of (A), (B) and (C).

Cathodes according to the present invention can comprise further components. They can comprise a current collector, such as, but not limited to, an aluminum foil. They can further comprise conductive carbon and a binder.

Cathodes according to the present invention contain carbon in electrically conductive modification, in brief also referred to as carbon (B). Carbon (B) can be selected from soot, active carbon, carbon nanotubes, graphene, and graphite, and from combinations of at least two of the foregoing.

Suitable binders (C) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homo-polyethylene, but also copolymers of ethylene which comprise at least 50 mol-% of copolymerized ethylene and up to 50 mol-% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, C₁-C₁₀-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol-% of copolymerized propylene and up to 50 mol-% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, C₁-C₁₀-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight M_{w} in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising inventive electrode active material, carbon, and binder, at least one anode, and at least one electrolyte.

Embodiments of inventive cathodes have been described above in detail.

Said anode may contain at least one anode active material, such as carbon (graphite), TiO₂, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols can here comprise up to 20 mol-% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol.

The molecular weight M_{w} of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (IV) and (V) 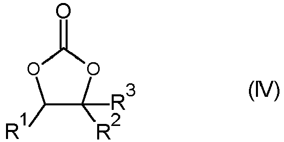 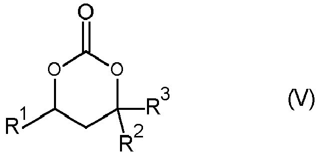 where R¹, R² and R³ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R¹ is methyl and R² and R³ are each hydrogen, or R¹, R² and R³ are each hydrogen.

In yet another embodiment, in formula (IV) R¹ is fluorine and both R² and R³ are hydrogen.

Another preferred cyclic organic carbonate is vinylene carbonate, formula (VI).

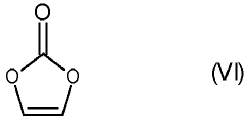

The solvent or solvents is/are preferably used in the water-free state, i.e. with a water content in the range from 1 ppm to 0.1% by weight, which can be determined, for example, by Karl-Fischer titration.

Electrolyte (C) further comprises at least one electrolyte salt. Suitable electrolyte salts are, in particular, lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄ and salts of the general formula (CₙF₂ₙ₊₁SO₂)ₜYLi, where m is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

In an embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example at low temperatures (zero °C or below, for example down to -10°C or even less), a very good discharge and cycling behavior.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by the following working examples.

Average particle diameters (D50) were determined by dynamic light scattering ("DLS"). Percentages are % by weight unless specifically noted otherwise.

The specific surface (BET was in each case measured according to DIN-ISO 9277:2003-05. after drying the sample at 120°C for 60 min under vacuum for precursors and at 200°C for 30 minutes for cathode active materials.

General remarks: Percentages refer to weight% unless specifically mentioned otherwise.

The pH values are defined and determined at 23°C.

Working examples: Manufacture of inventive cathode active materials

### General:

For step (b) in the below working examples, an ammonia stabilized colloidal zirconia solution, ZrO₂·aq with a pH value 8 (commercially available from Nyacol, 11 wt% Zr) was used.
Step (e) in the below working examples were performed in a conventional furnace (Linn High Therm). After calcination according to step (e), the resultant cathode active materials were cooled to 120 °C at a cooling rate of 10 °C min⁻¹ and brought to a dry room. Subsequently, they were sieved using a mesh size of 32 µm.

### I. Manufacture of a Nickel hydroxide Precursor

Step (a.1): Precipitation of nickel hydroxide was performed at 55°C under a nitrogen atmosphere using a stirred tank reactor with a volume of 2.3 I. Aqueous solutions of nickel sulfate, ammonia and sodium hydroxide were fed into the reactor. The individual flow rates were adjusted to ensure a pH value of 12.4 (plus/minus 0.1), a molar ratio of ammonia to nickel of 0.7 and a residence time of around 5 hours. The run time in the reactor was 12 hours followed by 5 hour ripening step without addition of reactants. The obtained solid was removed by filtration, washed with deionized water for 12 hours and dried at 120 °C for 16 hours. P-CAM.1 was obtained as a powder with an average particle diameter of (d50) = 12.0 µm and span of 0.5.

### II. Manufacture of inventive and of comparative Cathode Active Materials

General remark: The residual moisture content of the materials obtained from steps C-(c.1), and (c.4) was in the range of from 50 to 80 ppm each, determined by Karl Fischer-titration.

### 11.1 Manufacture of C-CAM.1

Step C-(c.1): An amount of 50 g of P-CAM.1 were dried in a conventional furnace (Nabertherm) in air for one hour at 900 °C. The heating ramp was 1 °C min⁻¹. The resultant nickel oxide was analyzed by ICP-OES and the Ni content was determined to be 78.8 wt%.

Step C-(d.1), calcination: 10 g of the nickel oxide from step C-(c.1) were mixed with 5.81 g LiOH·H₂O using a blender. The Li/Ni molar ratio was 1.03.

Step C-(e.1): The mixture from step C-(d.1) was then poured into an alumina crucible and calcined. For this purpose, the mixture was heated to 400 °C for four hours and then to 700 °C for six hours. The heating ramp was 3 °C min⁻¹ and the calcination was performed under pure oxygen atmosphere (∼ 10 volume exchanges per hour). C-CAM.1 was obtained, Li/Ni = 1.03.

### II.2: Manufacture of comparative Cathode Active Material C-CAM.2

Step C-(d.2): An amount of 20 g of the nickel oxide from step C-(c.1) were mixed with 11.40 g LiOH·H₂O using a blender. The Li/Ni molar ratio was 1.01.

Step C-(e.2): 15 g of the mixture from step C-(d.2) were poured into an alumina crucible and heated to 400 °C for four hours and afterwards heated to 700 °C for six hours. The heating ramp was 3 °C min⁻¹, and the calcination was performed under pure oxygen atmosphere (∼ 10 volume exchanges per hour). C-CAM.2 was obtained.

### II.3 Manufacture of comparative Cathode Active Material C-CAM.3

Step C-(e.3): 15 g of the mixture from step C-(d.2) were poured into an alumina crucible and heated to 400 °C for four hours and then to 700 °C for 12 hours. The heating ramp was 3 °C min⁻¹, and the calcination was performed under pure oxygen atmosphere (∼ 10 volume exchanges per hour). C-CAM.3 was obtained.

### II.4 Manufacture of Inventive Cathode Active Material CAM.4

Step (b.4): A glass bowl was charged with 80 g of P-CAM.1 and 1.77 g of the above colloidal zirconia solution were added on top, corresponding to 0.25 mol-% Zr with respect to Ni, and mixed thoroughly with a spatula. Then, the water was removed by evaporation in an oven with 110°C (3 hours). A powder was obtained.

Step (c.4): The powder from step (b.4) was poured into an alumina crucible and dried in a furnace (Nabertherm) in air for one hour at 900 °C. The heating ramp was 1 °C min⁻¹. The resultant Zr-doped nickel oxide was analyzed by ICP-OES and the Ni content was determined to be 76.9 wt%. The Zr content was 0.3% by weight.

Step (d.4): An amount of 8 g of the Zr-doped nickel oxide from step (c.4) was mixed with 4.55 g LiOH·H₂O using a blender. The Li/Ni molar ratio was 1.03.

Step (e.4): The mixture obtained from step (d.4) were poured into an alumina crucible and heated to 400 °C for four hours and then to 700 °C for 6 hours. The heating ramp was 3 °C min⁻¹, and the calcination was performed under pure oxygen atmosphere (∼ 10 volume exchanges per hour). CAM.4 was obtained.

### 11.5 Manufacture of comparative Cathode Active Material CAM.5

Step (d.5): An amount of 16 g of the Zr-doped nickel oxide from step (c.4) were mixed with 8.91 g LiOH·H₂O using a blender. The Li/Ni molar ratio was 1.01.

Step (e.5): 10 g of the mixture from step (d.5) were poured into an alumina crucible and heated to 400 °C for four hours and then to 700 °C for six hours. The heating ramp was 3 °C min⁻¹, and the calcination was performed under pure oxygen atmosphere (∼ 10 volume exchanges per hour). CAM.5 was obtained.

### 11.6 Manufacture of comparative Cathode Active Material CAM.6

Step C-(e.3): 10 g of the mixture from step (d.5) were poured into an alumina crucible and heated to 400 °C for four hours and then to 700 °C for 12 hours. The heating ramp was 3 °C min⁻¹, and the calcination was performed under pure oxygen atmosphere (∼ 10 volume exchanges per hour). CAM.6 was obtained.

### Elemental Analysis

The following values were measured by ICP-OES:

**Table 1: Elemental analysis of comparative and inventive cathode active materials**

| Sample | Li [wt%] | Ni [wt%] | Li/TM molar ratio | Zr content [mol%] |
|---|---|---|---|---|
| C-CAM.1 | 7.03 | 59.56 | 1.00 | - |
| C-CAM.2 | 6.90 | 59.86 | 0.98 | - |
| C-CAM.3 | 6.87 | 59.98 | 0.97 | - |
| CAM.4 | 6.97 | 58.87 | 1.00 | 0.26 |
| CAM.5 | 6.87 | 59.03 | 0.98 | 0.26 |
| CAM.6 | 6.88 | 59.68 | 0.97 | 0.26 |

### III. Electrochemical Testing

### 111.1 Cathode manufacture, general protocol:

Electrode manufacture: Electrodes contained 94% of the respective CAM or C-CAM, 3% carbon black (Super C65) and 3% binder (polyvinylidene fluoride, Solef 5130). Slurries with a total solids content of 61% were mixed in N-methyl-2-pyrrolidone (planetary mixer, 24 minutes, 2,000 rpm) and cast onto aluminum foil tape by a box-type coater. After drying of the electrode tapes for 16 h at 120 °C in vacuo and calendaring, circular electrodes with a diameter of 14 mm were punched, weighed and dried at 120 °C under vacuum for 12 hours before entering in an Ar filled glove box. Average loading: 8 mg/cm², electrode density: 3 g/cm³.

### 111.2 Coin cell manufacture

Coin-type electrochemical cells were assembled in an argon-filled glovebox. Anode: 0.58 mm thick Li foil, separated from the cathode by a glass fiber separator (Whatman GF/D). An amount of 95 µl of 1 M LiPF₆ in ethylene carbonate (EC): ethylmethyl carbonate (EMC), 3:7 by weight, was used as the electrolyte. After assembly, the cells were crimped closed in an automated crimper. The cells were then transferred to a climate chamber and connected to a battery cycler (Series4000, MACCOR).

### 111.3 Coin half-cell testing.

All tests were performed at 25 °C. Cells were galvanostatically cycled at a Maccor 4000 battery cycler between 3.1 and 4.3 V at room temperature by applying the following C-rates until 70 % of the initial discharge capacity is reached at a certain discharge step:
The following test protocol was applied for coin half-cells: At first, the half-cell was charged at a C/20 rate to 4.3 V followed by a CV step until the current drops below C/50 or 30 min passed. A capacity of 200 mAh g⁻¹ was chosen for calculating the 1C current rate. Afterwards the cells were discharged at C/20 to 2.7 V. The second cycle was analogous to the first one, but with 4.35 V and 2.5 V as upper and lower voltage limit, respectively. This was followed by one cycle at C/3 between 4.3 V (with CV step) and 2.7 V. Then, the cells were charged at C/10 to 4.3 V (without CV step) and discharged at C/10 to 2.7 V, followed by one cycle with charging at C/10 to 4.3 V (without CV step) and discharging at 1C to 2.7 V.

**Table 2: Specific discharge capacities of the cycling test from cycle 1 to cycle 5 in CHC setup.**

| Sample | 1^{st} cycle / mAh g⁻¹ | 2^{nd} cycle / mAh g⁻¹ | 3^{rd} cycle / mAh g⁻¹ | 4^{th} cycle / mAh g⁻¹ | 5^{th} cycle / mAh g⁻¹ |
|---|---|---|---|---|---|
| C-CAM.1 | 208.2 | 207.7 | 185.4 | 186.7 | 171.1 |
| C-CAM.2 | 210.1 | 209.5 | 186.7 | 187.8 | 172.4 |
| C-CAM.3 | 210.0 | 209.4 | 186.5 | 188.0 | 172.5 |
| CAM.5 | 224.8 | 220.9 | 194.3 | 195.8 | 174.3 |
| CAM.6 | 226.1 | 223.7 | 200.8 | 202.8 | 184.6 |

## Claims

1. Process for making an electrode active material wherein said process comprises the following steps:
(a) Providing an (oxy)hydroxide of TM wherein TM is one or more metals wherein at least 90 mol% is Ni, referring to TM,
(b) Contacting said (oxy)hydroxide of TM with an aqueous slurry or a colloidal solution of an oxyhydroxide of Zr or Ti, followed by removal of water,
(c) heating said treated (oxy)hydroxide of TM from step (b) at a temperature in the range of from 700 to 1000°C, thereby obtaining a Zr or Ti containing oxide TMO or an oxyhydroxide of TM with a residual moisture content of at most 100 ppm,
(d) mixing said oxide or oxyhydroxide from step (c) with a source of lithium and with at least one compound of Mg or Al and with at least one compound of Nb, Ta, W, or with either a compound of Ti or Zr,
(e) treating the mixture obtained from step (d) thermally at a temperature in the range of from 550 to 850°C.

2. Process according to claim 1 wherein the slurry in step (b) has a pH value in the range of from 7 to 10.

3. Process according to claim 1 or 2 wherein in step (a), the (oxy)hydroxide contains both Co and Mn.

4. Process according to any of the preceding claims wherein TM is nickel or corresponds to general formula (I)
(NiₐCo_{b}Mn_{c})_{1-d}M¹_{d} (I)
with a + b + c = 1 and b +c > zero and a (1-d) ≥ 0.9 and wherein
a is in the range of from 0.90 to 0.99,
b is in the range of from zero to 0.1,
c is in the range of from zero to 0.1,
d is in the range of from zero to 0.05,
M¹ is at least one of Al, Mg, W, Mo, Ti or Zr.

5. Process according to any of the preceding claims wherein in steps (b) and (d), the same transition metal is not added twice.

6. Process according to any of the preceding claims additionally comprising a step (f) of adding a compound of boron or tungsten to the material obtained from step (e) and a subsequent thermal treatment.

7. Process according to any of the preceding claims wherein the thermal treatment in step (e) is at a lower temperature than in step (c).

8. Process according to any of the preceding claims wherein step (e) is performed in an atmosphere of at least 80 vol-% oxygen.

9. Particulate oxide according to general formula TMO_{1+y}, wherein y is in the range of from zero to 0.1, TM is nickel or corresponds to general formula (II),
(NiₐCO_{b}Mn_{c})₁₋ₑM²ₑ (II)
with a + b + c = 1 and b +c ≥ zero and a (1-d) ≥ 0.9 and wherein
a is in the range of from 0.90 to 0.99,
b is in the range of from zero to 0.1,
c is in the range of from zero to 0.1,
d is in the range of from zero to 0.05,
e is in the range of from 0.0025 to 0.01,
M² is at least one of Ti and Zr.

10. Particulate material according to claim 9 wherein said oxide has an average primary particle diameter (D50) in the range of from 200 to 1,000 nm.

11. Particulate material obtained by steps (a) to (c) of the process according to any of the claims 1 to 4.

12. Particulate electrode active material comprising a composite lithium metal oxide according to the formula Li₁₊ₓTM'₁₋ₓO₂ and, optionally, a coating comprising at least one compound of boron or W, and wherein x is in the range of from -0.02 to +0.02, and wherein TM' corresponds to general formula (III)
{(NiₐCo_{b}Mn_{c})_{1-d}M¹_{d}}₁₋ₑM²ₑ (III)
with
a is in the range of from 0.90 to 0.99,
b is in the range of from zero to 0.1,
c is in the range of from zero to 0.1,
e is in the range of from 0.0025 to 0.01,
M¹ is selected from Al, Mg, Nb, Ta, Ti, and Zr,
M² is at least one of Ti and Zr, and
a + b + c = 1 and b +c ≥ zero and a ·(1-e) ≥ 0.9.

13. Particulate electrode active material wherein
either M² is Zr and M¹ is selected from at least one of Al, Mg, Nb, Ta, and Ti, or M² is Ti and M² is selected from at least one of Al, Mg, Nb, Ta, and Zr.

14. Cathode containing
(A) at least one electrode active material according to any of claims 12 or 13,
(B) carbon in electrically conductive form,
(C) a binder material.

15. Electrochemical cell containing at least one cathode according to claim 14.
